# EUROPEAN PATENT SPECIFICATION

(11) **EP 3 839 383 B1**
(45) Date of publication and mention of the grant of the patent: **12.10.2022**
(21) Application number: 19218485.1
(22) Date of filing: 20.12.2019
(51) Int. Cl.: F25D 3/02, B60H 1/32, B60H 1/00, F25C 3/00

(54) **A METHOD AND VEHICLE CLIMATE SYSTEM CONFIGURED TO GENERATE A SNOW EFFECT INSIDE OF A VEHICLE**
VERFAHREN UND FAHRZEUGKLIMASYSTEM MIT KONFIGURATION ZUR ERZEUGUNG EINES SCHNEEEFFEKTS IM INNEREN EINES FAHRZEUGS
PROCÉDÉ ET SYSTÈME DE CLIMATISATION DE VÉHICULE CONÇUS POUR GÉNÉRER UN EFFET DE NEIGE À L'INTÉRIEUR D'UN VÉHICULE

(43) Date of publication of application: 23.06.2021
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: HAGSTRÖM, Albin, 415 45 GÖTEBORG (SE); SETTERBERG, Johan, 416 79 GÖTEBORG (SE)
(74) Representative: Zacco Sweden AB

(56) References cited:
- CN-A- 107 351 636
- DE-B3-102006 011 947
- JP-A- 2002 036 866
- US-A- 5 168 717
- US-A- 5 775 111

## Description

### Technical field

The present invention relates to a vehicle climate system.

### Background art

Today there are vehicle climate systems that are configured to maintain a comfortable climate inside of the vehicle. Very often the vehicle climate systems are configured to maintain the temperature in the vehicle compartment at a comfortable temperature independent on if it is warm or cold outside of the vehicle. The vehicle climate systems are often configured to provide the same temperature inside of the whole vehicle, comprising one or more compartments. There are vehicle compartment systems that are configured to provide air with a certain temperature on the driver side and a slight different temperature on the passenger side. The temperature is often more or less warming or more or less cooling the air that is supplied into the vehicle.

One example of art in the field is US5775111A disclosing a portable ice and CO2 snow maker. Another example of art in the field is CN107351636A disclosing a method for a vehicle to be heated or cooled.

### Summary

Current vehicle climate systems are configured to provide one desired air temperature inside the vehicle, e.g. warm air at a certain temperature, on the driver side, and slightly warmer air on the passenger side. The air that fills the vehicle and all its compartments is warmed up or cooled down dependent on e.g. the surrounding temperature or dependent in settings by the vehicle occupant. In order to warm up or cool down all the air inside of the vehicle, to maintain a desired temperature inside of the vehicle, a certain amount of energy is required. When, e.g. the vehicle stops, and the vehicle occupants leave the vehicle, the air inside of the vehicle is mixed with air from the outside, and at the time of next departure, all the air inside of the vehicle needs to either be cooled down or warmed up again.

The inventors have realized that instead of warming up or cooling down all the air that fills all the compartments inside of the vehicle, a more energy efficient way of providing a desired climate for a vehicle occupant is to provide a local climate effect at a desired predefined zone of the vehicle compartment that is close to the vehicle occupant. The inventors have also realized that a vehicle occupant may desire a warm temperature at one part of the body, e.g. warming the feet, and at the same time desire a cold temperature at another part of the body, e.g. cooling the face. This is not possible with the current vehicle climate systems that provides with air of a certain temperature. In particular, the inventors have realized that there is a desire to be able to cool down a vehicle occupant at a first desired predefined zone of the vehicle compartment, locally, close to the vehicle occupant, in order to avoid spending energy of cooling down all the air inside of the vehicle and cool down other parts of the body that is desired to be kept at a higher temperature.

The inventors have realized that by cooling the vehicle occupant using artificial snow inside of the vehicle, the artificial snow can not only be used for generating a cooling effect for the vehicle occupant the artificial snow can also be used for generating a snow effect, as a visual and sensible fun effect, for the vehicle occupant. In some cases it is desirable to provide a customer sensation using the snow as visual effect in movies or games played inside the vehicle without cooling the occupants. In these scenarios the snow is directed away from the vehicle occupants bodies rather surrounding them.

It is an object of the present invention to mitigate, alleviate or eliminate one or more of the above-identified deficiencies and disadvantages in the prior art and solve at least the above mentioned problem. According to a first aspect there is provided a vehicle climate system configured to generate a snow effect within a vehicle occupant compartment of a vehicle, the vehicle climate system comprises a liquid container configured to contain a liquid for generating artificial snow, an air inlet configured to supply air to the inside of the vehicle for generating artificial snow, and at least a first cooler outlet in fluid communication with the liquid container and the air inlet and configured to output artificial snow inside of the vehicle.

An advantage with the vehicle climate system is that the snow effect can be generated at the at least first cooler outlet for cooling the vehicle occupant and/or for generating a visual fun effect for the vehicle occupant.

According to some embodiments, the vehicle climate system further comprises at least a first cold liquid generator configured to cool the liquid to a temperature that is above the freezing temperature of the liquid, and at least a first cold air generator configured to cool air to a temperature that is below the freezing temperature of the liquid, wherein the cooled liquid is mixed with the cooled air at the least first cooler outlet for generating the artificial snow.

An advantage is that the vehicle climate system is prepared to generate a snow effect by keeping the liquid cool and then by mixing the cold liquid with the cooled air, having a temperature that is below the freezing temperature of the liquid, the cooled liquid easily freezes to snow crystals for generating the snow effect.

According to some embodiments, the cooled liquid is transported from the at least first cold liquid generator to the at least first cooler outlet via a first pipeline system inside of the vehicle for outputting artificial snow in at least a first predefined zone of the vehicle compartment defined by the range of the at least first cooler outlet inside of the vehicle.

By using the first pipeline system, the snow effect can be generated at a desired location inside of the vehicle that is remote from the cold liquid generator, which corresponds to a predefined zone of the vehicle compartment that is within range of the cooler outlet at the desired location.

According to some embodiments, the cooled air is transported from the at least first cold air generator to the at least first cooler outlet via a second pipeline system inside of the vehicle for outputting artificial snow in at least a first predefined zone of the vehicle compartment defined by the range of the at least first cooler outlet inside of the vehicle.

By using the second pipeline system, the snow effect can be generated at a desired location inside of the vehicle, which corresponds to a predefined zone of the vehicle compartment that is within range of the cooler outlet at the desired location.

According to some embodiments, the vehicle climate system further comprises a processing circuitry configured to cause the vehicle climate system to receive a first control signal, indicative of generation of artificial snow, and generate artificial snow according to the first control signal.

The vehicle control system can hence generate artificial snow on demand after receiving the first control signal.

According to some embodiments, the vehicle climate system comprises a plurality of cooler outlets and the first control signal comprises a request to generate artificial snow by at least a first cooler outlet of the plurality of cooler outlets for generating the artificial snow in at least a first predefined zone of the vehicle compartment.

An advantage is that a request to generate artificial snow can be a request to generate the artificial snow at a certain location, to provide the snow effect at that location where the snow effect is desired, e.g. cooling a part of a vehicle occupant placed in the first predefined zone of the vehicle compartment.

According to some embodiments, the first control signal is generated by an electronic device operatively connected to the vehicle climate system.

An advantage is that an electronic device, e.g. a portable electronic device, can be used to control the vehicle climate system and hence interact with the vehicle.

According to some embodiments, wherein the first control signal is associated with an event in a game played at the electronic device.

An advantage is that the user experience on the electronic device is extended for the vehicle occupant to include the surroundings of the vehicle occupant.

According to some embodiments, the artificial snow inside of a vehicle is generated as a visual and/or cooling snow effect in a real environment associated with a virtual environment of the game.

An advantage is that the user experience on the electronic device is extended for the vehicle occupant by a sensible and visible snow effect for the vehicle occupant as an extension of an effect of the game played on the electronic device.

According to some embodiments, the first control signal is generated to cause a cooling effect at the vehicle occupant by the artificial snow.

An advantage is that the vehicle climate system can be used in combination with a heating, ventilation and air conditioning system for providing a local cooling effect close to the vehicle occupant.

According to some embodiments, the first control signal is generated to cause the cooling effect at a predefined part of the vehicle occupant that is located in at least a first predefined zone of the vehicle compartment inside of the vehicle.

An advantage is that the vehicle climate system can be used to provide a desired cooling effect at a certain first predefined zone of the vehicle compartment defined by the range of the at least first cooler outlet inside of the vehicle.

According to a second aspect there is provided a method for generating a snow effect within a vehicle occupant compartment of a vehicle, the method comprising receiving a first control signal, indicative of generation of artificial snow, and generating artificial snow by the vehicle climate system (100) according to claim 1, by least a first cooler outlet configured to output artificial snow inside of the vehicle, according to the first control signal.

An advantage with the vehicle climate system is that the snow effect can be generated at the at least first cooler outlet for cooling the vehicle occupant and/or for generating a visual fun effect for the vehicle occupant.

According to some embodiments, the first control signal is generated by an electronic device operatively connected to the vehicle climate system.

An advantage is that an electronic device, e.g. a portable electronic device, can be used to control the vehicle climate system and hence interact with the vehicle.

According to some embodiments, the first control signal is generated to cause a cooling effect at the vehicle occupant by the artificial snow.

An advantage is that the vehicle climate system can be used in combination with a heating, ventilation and air conditioning system for providing a local cooling effect close to the vehicle occupant.

According to a third aspect there is provided a computer program product comprising a non-transitory computer readable medium, having thereon a computer program comprising program instructions, the computer program being loadable into a processing circuitry and configured to cause execution of the method when the computer program is run by the at least one processing circuitry.

Effects and features of the second and third aspects are to a large extent analogous to those described above in connection with the first aspect. Embodiments mentioned in relation to the first aspect are largely compatible with the second and third aspects.

The present invention will become apparent from the detailed description given below. The detailed description and specific examples disclose preferred embodiments of the invention by way of illustration only.

It is to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present invention, will be more fully appreciated by reference to the following illustrative and non-limiting detailed description of example embodiments of the present disclosure, when taken in conjunction with the accompanying drawings.
Figure 1 illustrates an example overview of the vehicle climate system according to an embodiment of the present invention.
Figure 2 illustrates an example overview of the vehicle climate system wherein artificial snow is outputted in predefined zones according to an example embodiment of the present invention.
Figure 3 illustrates a flow chart of the method steps according to some aspects of the invention.
Figure 4 illustrates a computer program product according to some aspects of the invention.

### Detailed description

The present invention will now be described with reference to the accompanying drawings, in which preferred example embodiments of the invention are shown.

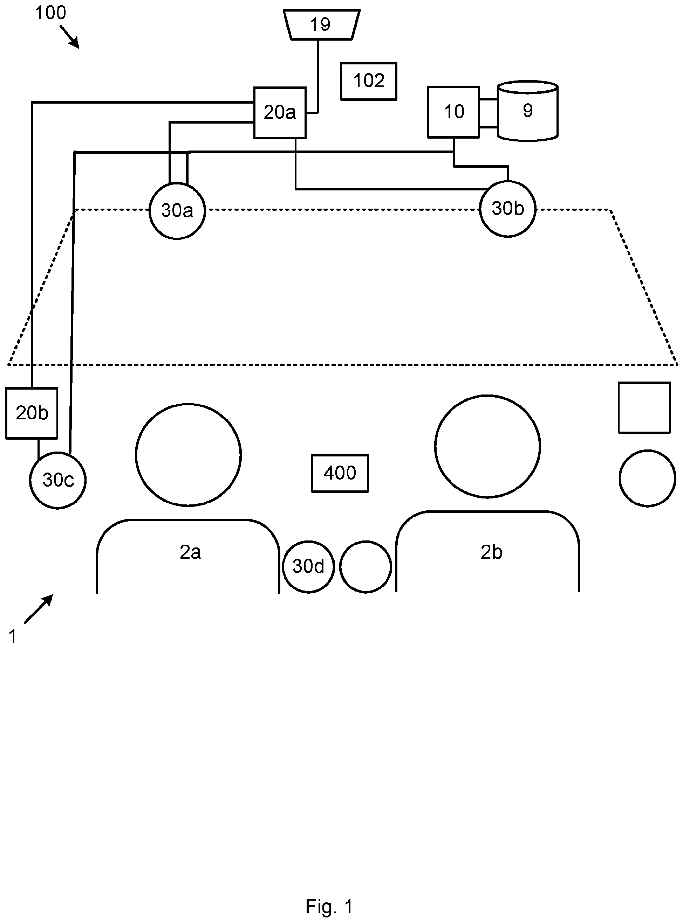

Figure 1 illustrates an example overview of the vehicle climate system according to an embodiment of the present invention. The first aspect of this invention shows a vehicle climate system 100 configured to generate a snow effect inside of a vehicle 1. The vehicle climate system 100 comprises a liquid container 9 configured to contain a liquid for generating artificial snow. According to some embodiments the vehicle climate system 100 comprises a plurality of liquid containers.

According to some embodiments the liquid comprising water mixed with ice nucleation-active proteins. According to some embodiments the liquid comprising water mixed with ice nucleation-active proteins from the bacterium pseudomonas syringe. These proteins serve as effective nuclei to initiate the formation of ice crystals at relatively high temperatures, so that the liquid will turn into ice before falling to the ground.

The vehicle climate system 100 comprises an air inlet 19 configured to supply air to the inside of the vehicle 1 for generating artificial snow. According to some embodiments the air inlet 19 is also used for supplying air to an heating, ventilation and air conditioning system of the vehicle 1. According to some embodiments the vehicle climate system 100 comprises a plurality of air inlets. According to some embodiments the air inlet 19 is connected to an air outlet of a heating, ventilation and air conditioning system of the vehicle, providing the air inlet 19 with cooled air from the heating, ventilation and air conditioning system. In an example the air is hence, at an already cooler temperature compare to the air from the outside of the vehicle.

The vehicle climate system 100 comprises at least a first cooler outlet 30a,30b,30c,30d in fluid communication with the liquid container 9 and the air inlet 19 and configured to output artificial snow inside of the vehicle 1. According to some embodiments, the liquid provided to the at least first cooler outlet 30a,30b,30c,30d is turned into droplets at the at least first cooler outlet 30a,30b,30c,30d. According to some embodiments a nozzle arranged at the at least first cooler outlet 30a,30b,30c,30d transfers the cooled liquid to droplets. In an example the nozzle is arranged to provide different kinds of droplets of different size. In an example the nozzle is controlled electromechanically by the vehicle climate system 100 to provide different kinds of droplets of different size. In an example the nozzle is configured to controlled mechanically by e.g. a vehicle occupant 2a, 2b to provide different kinds of droplets of different size. According to some embodiments, the cooled air provided to the at least first cooler outlet 30a,30b,30c,30d is mixed with the droplets of the cooled liquid at the at least first cooler outlet 30a,30b,30c,30d so that the droplets of the cooled liquid will turn into ice, in order to generate artificial snow at the at least first cooler outlet 30a,30b,30c,30d.

According to some embodiments the at least first cooler outlet 30a,30b,30c,30d can be controlled by a vehicle occupant 2a,2b to provide and output artificial snow in a certain direction. According to some embodiments the air, from the air inlet 19, that is provided to the at least first cooler outlet 30a,30b,30c,30d can be guided in a direction and/or regulated in volume, by air vents in the at least first cooler outlet 30a,30b,30c,30d. In an example the at least first cooler outlet 30a,30b,30c,30d is the air ventilation outlet of the vehicle 1. According to some embodiments, the at least first cooler outlet 30a,30b,30c,30d is arranged inside of the vehicle 1 at a predefined location in order to provide artificial snow at the predefined location inside of the vehicle 1. According to some embodiments, the vehicle climate system 100 comprises a plurality of cooler outlets 30a,30b,30c,30d arranged inside of the vehicle 1 at predefined locations in order to provide artificial snow at the predefined locations inside of the vehicle 1. According to some embodiments, the vehicle climate system 100 comprises a plurality of cooler outlets 30a,30b,30c,30d, and the artificial snow is only provided by a first cooler outlet 30a,30b,30c,30d. According to an aspect the cooler outlets 30a,30b,30c,30d are configured to provide artificial snow independent of each other.

Figure 1 illustrates example locations of cooler outlets 30a,30b,30c,30d inside of the vehicle. In Figure 1 the cooler outlet 30a is arranged at the inside of the vehicle above a windshield 15 close to the ceiling of the vehicle 1 for outputting artificial snow in front of the vehicle occupant 2a at the left side of the vehicle 1. Further, in Figure 1 the cooler outlet 30b is also arranged at the inside of the vehicle above a windshield 15 close to the ceiling of the vehicle 1 for outputting artificial snow in front of the vehicle occupant 2b at the right side of the vehicle 1. The cooler outlet 30c is arranged for outputting artificial snow onto the chest of the vehicle occupant 2a and the cooler outlet 30d is arranged for outputting artificial snow onto the feet of the vehicle occupant 2a. A plurality of further cooler outputs are illustrated in Figure 1.

An advantage with the vehicle climate system 100 is that the snow effect can be generated at the at least first cooler outlet 30a,30b,30c,30d for cooling the vehicle occupant 2a,2b and/or for generating a visual fun effect for the vehicle occupant 2a,2b.

An advantage with the artificial snow for cooling the vehicle occupant 2a,2b is that the artificial snow lands on e.g. the skin of the vehicle occupant 2a,2b and melts to water. During this process, heat is emitted from the skin, and the cooling of the skin becomes more efficient compare to e.g. cooling the skin with cold air. According to some embodiments the amount of artificial snow is controlled by the amount of liquid provided to the at least first cooler outlet 30a,30b,30c,30d. An advantage with controlling the amount of liquid provided to the at least first cooler outlet 30a,30b,30c,30d is that the cooling effect can be controlled accordingly. In an example a lot of liquid is provided to the at least first cooler outlet 30a,30b,30c,30d to cause a large amount of artificial snow to be outputted from the at least first cooler outlet 30a,30b,30c,30d.

An advantage with the artificial snow for generating a visual fun effect for the vehicle occupant 2a,2b is that the vehicle occupant 2a,2b can see and sense the artificial snow. Snow is often associated with a positive and fun feeling and the snow effect inside of the vehicle can be used to enhance a positive and fun experience.

According to some embodiments the vehicle climate system 100 further comprises at least a first cold liquid generator 10 configured to cool the liquid to a temperature that is above the freezing temperature of the liquid. According to some embodiments the vehicle climate system 100 further comprises a plurality of cold liquid generators 10 arranged at the at least first cooler outlet 30a,30b,30c,30d. In an example, cold liquid generators 10 are arranged close to the at least first cooler outlet 30a,30b,30c,30d in order to keep the liquid as cold as possible before the liquid reaches the at least first cooler outlet 30a,30b,30c,30d. According to some embodiments the cold liquid generator 10 is in fluid communication with the liquid container 9 and in fluid communication with the at least first cooler outlet 30a,30b,30c,30d.

According to some embodiments the vehicle climate system 100 further comprises at least a first cold air generator 20a,20b configured to cool air to a temperature that is below the freezing temperature of the liquid. According to some embodiments the vehicle climate system 100 further comprises a plurality of cold air generators 20a,20b arranged at the at least first cooler outlet 30a,30b,30c,30d. In an example, cold air generators 20a,20b are arranged close to the at least first cooler outlet 30a,30b,30c,30d in order to keep the air as cold as possible before the air reaches the at least first cooler outlet 30a,30b,30c,30d. According to some embodiments the cold air generator 20a,20b is in fluid communication with the air inlet 19 and in fluid communication with the at least first cooler outlet 30a,30b,30c,30d. According to some embodiments a plurality of cold air generators 20a,20b are arranged in serial to cool the air plural times during transport of the air from the air inlet 19 to the at least first cooler outlet 30a,30b,30c,30d. In the illustration in Figure 1, the cold air generators 20a cools the air at a first time, and then the cold air generator 20b cools the air at a second time before the air reaches the cooler outlet 30c. An advantage with arranging the air generator 20a,20b close to the at least first cooler outlet 30a,30b,30c,30 is that heating of the cold air is minimized due to the short distance to the at least first cooler outlet 30a,30b,30c,30.

According to some embodiments the cooled liquid is mixed with the cooled air at the least first cooler outlet 30a,30b,30c,30d for generating the artificial snow. According to some embodiments, the cooled air provided to the at least first cooler outlet 30a,30b,30c,30d is mixed with the cooled liquid at the at least first cooler outlet 30a,30b,30c,30d so that the cooled liquid turns into ice, in order to generate artificial snow at the at least first cooler outlet 30a,30b,30c,30d. According to some embodiments a fan is in fluid communication with the at least first cooler outlet 30a,30b,30c,30d for providing a flow of snow from the at least first cooler outlet 30a,30b,30c,30d into the inside of the vehicle 1. According to some embodiments the fan is configured to be regulated in speed to adjust the flow of snow into the inside of the vehicle. In an example, the fan is arranged to increase the flow of cooled air for generating the snow effect.

An advantage is that the vehicle climate system 100 is prepared to generate a snow effect by keeping the liquid cool and then by mixing the cold liquid with the air, having a temperature that is below the freezing temperature of the liquid, the liquid easily freezes to snow for generating the snow effect.

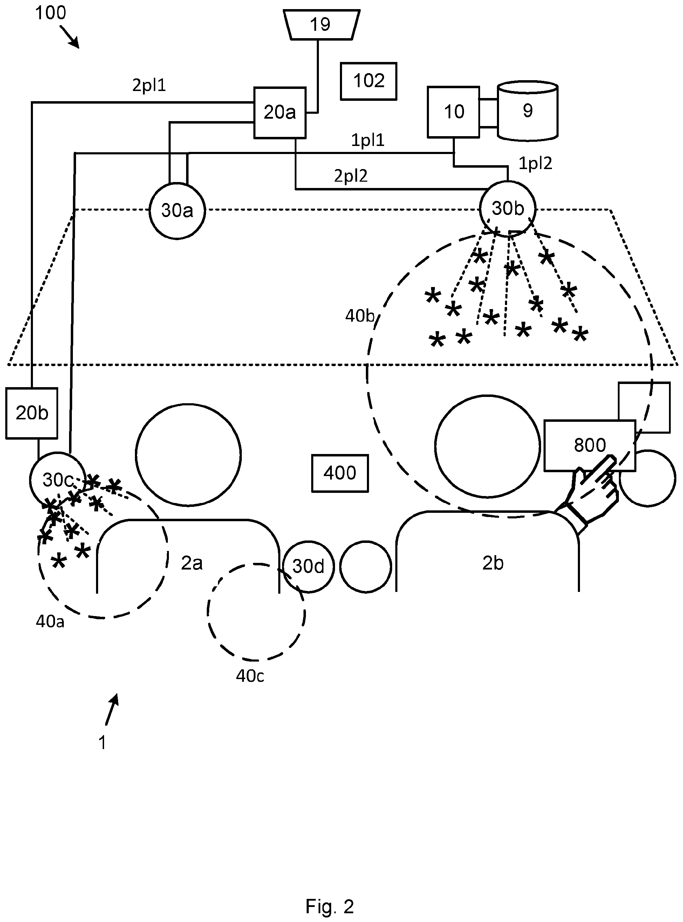

According to some embodiments the cooled liquid is transported from the at least first cold liquid generator 10 to the at least first cooler outlet 30a,30b,30c,30d via a first pipeline system 1pl1,1pl2,...,1pln inside of the vehicle 1 for outputting artificial snow in at least a first predefined zone of the vehicle compartment 40a,40b,40c defined by the range of the at least first cooler outlet 30a,30b,30c,30d inside of the vehicle 1. Figure 2 illustrates examples of two first pipeline systems 1pl1, 1pl2 inside of the vehicle 1. A primary first pipeline system 1pl1 is connecting the cold liquid generator 10 with the cooler outlet 30c. In the illustrative example in Figure 2, the cooler outlet 30c is arranged for outputting artificial snow in a predefined zone of the vehicle compartment 40a for outputting artificial snow onto the chest of the vehicle occupant 2a. Figure 2 also illustrates an example of a secondary first pipeline system 1pl2 inside of the vehicle 1. The secondary first pipeline system 1pl2 is connecting the cold liquid generator 10 with the cooler outlet 30b. In the illustrative example in Figure 2, the cooler outlet 30b is arranged for outputting artificial snow in a predefined zone of the vehicle compartment 40b for outputting artificial snow in front of the vehicle occupant 2b.

By using the first pipeline system, the snow effect can be generated at a desired location inside of the vehicle that is remote from the cold liquid generator, which corresponds to a predefined zone of the vehicle compartment that is within range of the cooler outlet at the desired location.

According to some embodiments the cooled air is transported from the at least first cold air generator 20a,20b to the at least first cooler outlet 30a,30b,30c,30d via a second pipeline system 2pl1,2pl2,...,2pln inside of the vehicle 1 for outputting artificial snow in at least a first predefined zone of the vehicle compartment 40a,40b,40c defined by the range of the at least first cooler outlet 30a,30b,30c,30d inside of the vehicle 1. Figure 2 illustrates examples of two second pipeline systems 2pl1, 2pl2 inside of the vehicle 1. A primary second pipeline system 2pl1 is connecting the cold air generator 20a with the air generator 20b, wherein the air generator 20b is arranged at the cooler outlet 30c. The primary second pipeline system 2pl1 provides cooled air from the cold air generator 20a to the cold air generator 20b where the cooled air is cooled again e.g. due to that the cooled air has been heated by the surrounding temperature during the transport in the primary second pipeline system. In the illustrative example in Figure 2, the cooler outlet 30c is arranged for outputting artificial snow in a predefined zone of the vehicle compartment 40a for outputting artificial snow onto the chest of the vehicle occupant 2a.

Figure 2 also illustrates an example of a secondary second pipeline system 2pl2 inside of the vehicle 1. The secondary second pipeline system 2pl2 is connecting the cold air generator 20a with the cooler outlet 30b. In the illustrative example in Figure 2, the cooler outlet 30b is arranged for outputting artificial snow in a predefined zone of the vehicle compartment 40b for outputting artificial snow in front of the vehicle occupant 2b.

By using the second pipeline system, the snow effect can be generated at a desired location inside of the vehicle, which corresponds to a predefined zone of the vehicle compartment that is within range of the cooler outlet at the desired location.

For illustrative purposes, the Figure 2 illustrates a vehicle compartment 40c and a cooler outlet 30d arranged at the vehicle compartment 40c for outputting artificial snow in a predefined zone of the vehicle compartment 40c for outputting artificial snow onto the feet of the vehicle occupant 2a.

According to some embodiments the vehicle climate system 100 further comprises a processing circuitry 102 configured to cause the vehicle climate system 100 to receive a first control signal, indicative of generation of artificial snow and generate artificial snow according to the first control signal. The vehicle control system can hence generate artificial snow on demand after receiving the first control signal. According to some embodiments, the vehicle climate system 100 is configured to receive the first control signal from a user interface 400 connected to vehicle climate system 100, where in the user interface 400, e.g. a touch sensitive display or similar input device, is configured for receiving input from the vehicle occupant 2a, 2b. According to some embodiments, the vehicle climate system 100 is configured to receive the first control signal from a heating, ventilation and air conditioning system for providing a local cooling effect close to the vehicle occupant 2a, 2b.

According to some embodiments the vehicle climate system 100 comprises a plurality of cooler outlets 30a,30b,30c,30d and the first control signal comprises a request to generate artificial snow by at least a first cooler outlet 30a,30b,30c,30d of the plurality of cooler outlets 30a,30b,30c,30d for generating the artificial snow in at least a first predefined zone of the vehicle compartment 40a,40b,40c. In an example the first control signal controls which cooler outlet 30a,30b,30c,30d that is to generate the artificial snow. An advantage is that a request to generate artificial snow can be a request to generate the artificial snow at a certain location, to provide the snow effect at that location where the snow effect is desired, e.g. cooling a part of a vehicle occupant placed in the first predefined zone of the vehicle compartment. In an example, the vehicle occupant 2a as illustrated in Figure 2, desires cooling of the face and the upper chest due to warm summer weather. In this example, the vehicle occupant 2a uses the user interface 400 to indicate where on the body the vehicle occupant 2a desires a cooling effect. The first signal, indicative of generation of artificial snow, then further comprises a request to generate artificial snow by the cooler outlet 30c.

According to some embodiments the first control signal is generated by an electronic device 800 operatively connected to the vehicle climate system 100. According to some embodiments the electronic device 800 is wirelessly connected to the vehicle climate system 100.

An advantage is that an electronic device 800, e.g. a portable electronic device, can be used to control the vehicle climate system 100 and hence interact with the vehicle 1. In the example as illustrated in Figure 2 the vehicle occupant 2b is playing a game on an electronic device 800, in form of a tablet.

According to some embodiments the vehicle climate system 100 is configured to establish wireless communication with the electronic device 800 via a wireless local area network such as a Wireless Local Area Network, WLAN, Bluetooth^{™}, ZigBee, Ultra-Wideband, Near Field Communication, NFC, Radio Frequency Identification, RFID, or similar network.

According to some embodiments, the electronic device 800 is any of a smartphone, a tablet, a portable game or a portable computer. According to some embodiments, the electronic device 800 is a position determination device, e.g. comprising a Global Position System receiver, configured to generate the first control signal dependent on the geographical position of the vehicle 1. In an example, the first control signal is generated when the vehicle 1 is determined to be within a predefined geographical area. In an example, the first control signal is generated when it is determined that the vehicle 1 is at the geographical area of a ski resort for generating a snow effect, used as a visual fun effect, for the vehicle occupant 2a,2b. In an example, the first control signal is generated when it is determined that the vehicle 1 is at a summer resort for generating a cooling effect for the vehicle occupant 2a,2b.

According to some embodiments the electronic device 800 is a camera configured to obtain images of the vehicle occupant 2a, 2b. According to an aspect, the first control signal is generated based on an obtained image of the vehicle occupant 2a, 2b. According to an aspect, the obtained image is analyzed using image processing, and in a determination that the vehicle occupant 2a,2b is wearing certain clothes the camera generates the first control signal. In an example the camera determines that the vehicle occupant 2a,2b is wearing ski clothes, and the first control signal is generated for generating a snow effect inside of a vehicle 1, used as a visual fun effect, for the vehicle occupant 2a,2b a cold winter day. In an example the camera determines that the vehicle occupant 2a,2b is wearing swim wear, and the first control signal is generated for generating a snow effect inside of a vehicle 1, used as a cooling effect for the vehicle occupant 2a,2b a hot summer day.

According to some embodiments the electronic device 800 is an infrared camera configured to obtain thermal images of the vehicle occupant 2a, 2b. According to an aspect, the first control signal is generated based on an obtained thermal image of the vehicle occupant 2a, 2b. According to an aspect, the obtained thermal image is analyzed and in a determination that the vehicle occupant 2a,2b is warm, the first control signal is generated for generating a snow effect inside of a vehicle 1, used as a cooling effect for the vehicle occupant 2a,2b.

According to some embodiments the processing circuitry 102 is further configured to cause the vehicle climate system 100 to receive a second control signal, indicative of cease of generation of artificial snow and cease generating artificial snow according to the second control signal. The vehicle control system can hence cease generating artificial snow on demand after receiving the second control signal.

According to some embodiments the second control signal is generated by an electronic device 800 operatively connected to the vehicle climate system 100. According to some embodiments the electronic device 800 is wirelessly connected to the vehicle climate system 100.

According to some embodiments, the electronic device 800 is a sensor configured to determine if the vehicle occupant 2a,2b is wet, and in a determination that the vehicle occupant 2a,2b is wet, generate the second control signal for terminating generation of the snow effect inside of the vehicle 1. According to some embodiments, the sensor is any of a camera, an infrared camera, a humidity sensor or a water sensor. According to an aspect, the second control signal is generated based on an obtained image of the vehicle occupant 2a, 2b. According to an aspect, the obtained image is analyzed using image processing, and in a determination that the vehicle occupant 2a,2b is wet, generate the second control signal.

According to some embodiments, the electronic device 800 is a sensor configured to determine if a humidity value inside of the vehicle 1 is above a predetermined threshold humidity value, and in a determination that the humidity value inside of the vehicle 1 is above the predetermined threshold humidity value, generate the second control signal for terminating generation of the snow effect inside of the vehicle 1.

According to some embodiments, at least a first humidity sensor is connected to the vehicle climate system 100, wherein the vehicle climate system 100 is further configured to determine, based on measurement by the at least first humidity sensor, if a humidity value inside of the vehicle 1 is above a predetermined threshold humidity value, and in a determination that the humidity value inside of the vehicle 1 is above the predetermined threshold humidity value, increase the amount of air from the outside of the vehicle 1 to the inside of the vehicle 1, via the air inlet 19 or any further air inlet of the vehicle 1.

According to some embodiments the first control signal is associated with an event in a game played at the electronic device 800. An advantage is that the user experience on the electronic device is extended for the vehicle occupant 2a,2b to include the surroundings of the vehicle occupant 2a,2b. In an example the first control signal is generated upon achieving a goal in the game, or e.g. when the weather changes in the game, or e.g. when a skier falls in a ski game etc.

According to some embodiments the artificial snow inside of a vehicle 1 is generated as a visual and/or cooling snow effect in a real environment associated with a virtual environment of the game. In an example, the virtual environment of the game is an artic expedition, and a snow storm is coming in, and if the player cannot avoid the snowstorm, the snow will start to fall, first not so intense when the snow storm is not that severe, but then increase when the game is in the middle of the snow storm. An advantage is that the user experience on the electronic device 800 is extended for the vehicle occupant 2a,2b by a sensible and visible snow effect for the vehicle occupant 2a,2b as an extension of an effect of the game played on the electronic device 800.

According to some embodiments the first control signal is generated to cause a cooling effect at the vehicle occupant 2a,2b by the artificial snow. An advantage is that the vehicle climate system 100 can be used in combination with a heating, ventilation and air conditioning system of the vehicle 1 for providing a local cooling effect close to the vehicle occupant 2a,2b.

According to some embodiments the first control signal is generated to cause the cooling effect at a predefined part of the vehicle occupant 2a,2b that is located in at least a first predefined zone of the vehicle compartment 40a,40b,40c inside of the vehicle 1.

An advantage is that the vehicle climate system 100 can be used to provide a desired cooling effect at a certain first predefined zone of the vehicle compartment 40a, 40b, 40c defined by the range of the at least first cooler outlet inside of the vehicle. For example, the vehicle climate system 100 can be arranged with a plurality of cooler outlets 30a, 30b, 30c, 30d arranged at predefined locations inside of the vehicle to cause a cooling effect at a predefined part of the vehicle occupant 2a,2b, e.g. at the feet, the legs, the arms, the back, the face, the neck, the hands, etc. of the vehicle occupant 2a,2b. In particular, the cooling effect can hence be provided locally instead of cooling the whole interior of the vehicle 1. This has the advantage that instead of warming up or cooling down all the air that fills all the compartments inside of the vehicle, the local cooling effect provides a more energy efficient way of providing a desired climate for the vehicle occupant 2a,2b by providing the cooling effect at a desired predefined zone of the vehicle compartment that is close to the vehicle occupant 2a,2b. This also means that other parts of the vehicle occupant 2a,2b can be at a different temperature. E.g. by providing a local cooling effect at the vehicle occupant 2a,2b according to the different embodiments of the disclosure, other parts of the vehicle occupant 2a,2b can e.g. be at a different temperature. Further, one vehicle occupant can have a cooling effect that is not felt by another vehicle occupant. E.g. as illustrated in the Figure 2, the vehicle occupant 2a can get a local cooling effect of the chest while the vehicle occupant 2b is not getting any cooling effect.

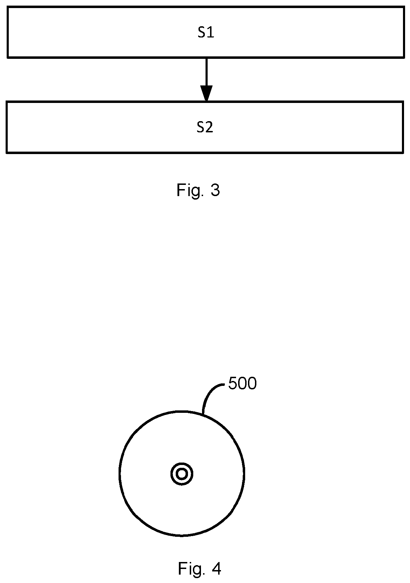

The second aspect of this invention shows a method for generating a snow effect inside of a vehicle 1 by a vehicle climate system 100. Figure 3 illustrates a flow chart of the method steps according to the invention. The method comprising the step S1 receiving a first control signal, indicative of generation of artificial snow, and the step S2 generating artificial snow, by least a first cooler outlet 30a,30b,30c,30d configured to output artificial snow inside of the vehicle 1, according to the first control signal.

An advantage with the method is that the snow effect can be generated at the at least first cooler outlet for cooling the vehicle occupant and/or for generating a visual fun effect for the vehicle occupant.

According to some embodiments the first control signal is generated by an electronic device 800 operatively connected to the vehicle climate system 100. An advantage is that an electronic device, e.g. a portable electronic device, can be used to control the vehicle climate system and hence interact with the vehicle.

According to some embodiments the first control signal is generated to cause a cooling effect at the vehicle occupant 2a,2b by the artificial snow. An advantage is that the vehicle climate system can be used in combination with a heating, ventilation and air conditioning system for providing a local cooling effect close to the vehicle occupant.

The third aspect of this invention shows a computer program product the second aspect comprising a non-transitory computer readable medium, having thereon a computer program comprising program instructions, the computer program being loadable into a processing circuitry 102 and configured to cause execution of the method when the computer program is run by the at least one processing circuitry 102.

## Claims

1. A vehicle climate system (100) configured to generate a snow effect within a vehicle occupant compartment of a vehicle (1), **characterised in that** the vehicle climate system (100) comprises:
a liquid container (9) configured to contain a liquid for generating artificial snow;
an air inlet (19) configured to supply air to the inside of the vehicle (1) for generating artificial snow; and
at least a first cooler outlet (30a,30b,30c,30d) in fluid communication with the liquid container (9) and the air inlet (19) and configured to output artificial snow inside of the vehicle (1).

2. The vehicle climate system (100) according to claim 1, wherein the vehicle climate system (100) further comprises:
at least a first cold liquid generator (10) configured to cool the liquid to a temperature that is above the freezing temperature of the liquid; and
at least a first cold air generator (20a,20b) configured to cool air to a temperature that is below the freezing temperature of the liquid;
wherein the cooled liquid is mixed with the cooled air at the least first cooler outlet (30a,30b,30c,30d) for generating the artificial snow.

3. The vehicle climate system (100) according to claim 2, wherein the cooled liquid is transported from the at least first cold liquid generator (10) to the at least first cooler outlet (30a,30b,30c,30d) via a first pipeline system (1pl1,1pl2,...,1pln) inside of the vehicle (1) for outputting artificial snow in at least a first predefined zone of the vehicle compartment (40a,40b,40c) defined by the range of the at least first cooler outlet (30a,30b,30c,30d) inside of the vehicle (1).

4. The vehicle climate system (100) according to any of the claims 2 or 3, wherein the cooled air is transported from the at least first cold air generator (20a,20b) to the at least first cooler outlet (30a,30b,30c,30d) via a second pipeline system (2pl1,2pl2,...,2pln) inside of the vehicle (1) for outputting artificial snow in at least a first predefined zone of the vehicle compartment (40a,40b,40c) defined by the range of the at least first cooler outlet (30a,30b,30c,30d) inside of the vehicle (1).

5. The vehicle climate system (100) according to any of the preceding claims, wherein the vehicle climate system (100) further comprises: a processing circuitry (102) configured to cause the vehicle climate system (100) to:
- receive a first control signal, indicative of generation of artificial snow; and
- generate artificial snow according to the first control signal.

6. The vehicle climate system (100) according to claim 5, wherein the vehicle climate system (100) comprises a plurality of cooler outlets (30a,30b,30c,30d) and the first control signal comprises a request to generate artificial snow by at least a first cooler outlet (30a,30b,30c,30d) of the plurality of cooler outlets (30a,30b,30c,30d) for generating the artificial snow in at least a first predefined zone of the vehicle compartment (40a,40b,40c).

7. The vehicle climate system (100) according to any of the claims 5-6, wherein the first control signal is generated by an electronic device (800) operatively connected to the vehicle climate system (100).

8. The vehicle climate system (100) according to claim 7 wherein the first control signal is associated with an event in a game played at the electronic device (800).

9. The vehicle climate control system (100) according to claim 8 wherein the artificial snow inside of a vehicle (1) is generated as a visual and/or cooling snow effect in a real environment associated with a virtual environment of the game.

10. The vehicle climate system (100) according to any of the claims 5-6, wherein the first control signal is generated to cause a cooling effect at the vehicle occupant (2a,2b) by the artificial snow.

11. The vehicle climate system (100) according to claim 10, wherein the first control signal is generated to cause the cooling effect at a predefined part of the vehicle occupant (2a,2b) that is located in at least a first predefined zone of the vehicle compartment (40a,40b,40c) inside of the vehicle (1).

12. A method for generating a snow effect within a vehicle occupant compartment of a vehicle (1) by a vehicle climate system (100), the method comprising:
- (S1) receiving a first control signal, indicative of generation of artificial snow; and
- (S2) generating artificial snow by the vehicle climate system (100) according to claim 1, by at least a first cooler outlet (30a,30b,30c,30d) configured to output artificial snow inside of the vehicle (1), according to the first control signal.

13. The method according to claim 12, wherein the first control signal is generated by an electronic device (800) operatively connected to the vehicle climate system (100).

14. The method according to claim 12, wherein the first control signal is generated to cause a cooling effect at the vehicle occupant (2a,2b) by the artificial snow.

15. A computer program product (500) comprising a non-transitory computer readable medium, having thereon a computer program comprising program instructions, the computer program being loadable into a processing circuitry (102) and configured to cause execution of the method according to any of claims 12 through 14 when the computer program is run by the at least one processing circuitry (102).

## Patentansprüche

1. Fahrzeugklimaanlage (100), die konfiguriert ist, um einen Schneeeffekt in einem Fahrzeuginsassenraum eines Fahrzeugs (1) zu erzeugen, **dadurch gekennzeichnet, dass** die Fahrzeugklimaanlage (100) Folgendes umfasst:
einen Flüssigkeitsbehälter (9), der konfiguriert ist, um eine Flüssigkeit zum Erzeugen von künstlichem Schnee zu enthalten;
einen Lufeinlass (19), der konfiguriert ist, um zur Erzeugung von künstlichem Schnee Luft im Inneren des Fahrzeugs (1) zuzuführen; und
mindestens einen ersten Kühlerauslass (30a,30b,30c,30d) in Fluidverbindung mit dem Flüssigkeitsbehälter (9) und dem Lufteinlass (19) und konfiguriert, um im Inneren des Fahrzeugs (1) künstlichen Schnee auszugeben.

2. Fahrzeugklimaanlage (100) nach Anspruch 1, wobei die Fahrzeugklimaanlage (100) ferner Folgendes umfasst:
mindestens einen ersten Kaltflüssigkeitsgenerator (10), der konfiguriert ist, um die Flüssigkeit auf eine Temperatur zu kühlen, die über der Gefriertemperatur der Flüssigkeit liegt; und
mindestens einen zweiten Kaltluftgenerator (20a,20b), der konfiguriert ist, um Luft auf eine Temperatur zu kühlen, die unter der Gefriertemperatur der Flüssigkeit liegt;
wobei die gekühlte Flüssigkeit mit der gekühlten Luft an dem mindestens ersten Kühlerauslass (30a,30b,30c,30d) zum Erzeugen des künstlichen Schnees gemischt wird.

3. Fahrzeugklimaanlage (100) nach Anspruch 2, wobei die gekühlte Flüssigkeit von dem mindestens ersten Kaltflüssigkeitsgenerator (10) zu dem mindestens ersten Kühlerauslass (30a,30b,30c,30d) über ein erstes Rohrleitungssystem (1pl1,1pl2,...,1pln) innerhalb des Fahrzeugs (1) zum Ausgeben von künstlichem Schnee in mindestens einer ersten vordefinierten Zone des Fahrzeugraums (40a,40b,40c), die durch den Bereich des mindestens ersten Kühlerauslasses (30a,30b,30c,30d) innerhalb des Fahrzeugs (1) definiert ist, transportiert wird.

4. Fahrzeugklimaanlage (100) nach einem der Ansprüche 2 oder 3, wobei die gekühlte Luft von dem mindestens ersten Kaltluftgenerator (20a,20b) zu dem mindestens ersten Kühlerauslass (30a,30b,30c,30d) über ein zweites Rohrleitungssystem (2pl1,2pl2,...,2pln) innerhalb des Fahrzeugs (1) zum Ausgeben von künstlichem Schnee in mindestens einer ersten vordefinierten Zone des Fahrzeugraums (40a,40b,40c), die durch den Bereich des mindestens ersten Kühlerauslasses (30a,30b,30c,30d) innerhalb des Fahrzeugs (1) definiert ist, transportiert wird.

5. Fahrzeugklimaanlage (100) nach einem der vorgehenden Ansprüche, wobei die Fahrzeugklimaanlage (100) ferner Folgendes umfasst: eine Verarbeitungsschaltung (102), die konfiguriert ist, um die Fahrzeugklimaanlage (100) zu Folgendem zu veranlassen:
- ein erstes Steuersignal zu empfangen, das die Erzeugung von künstlichem Schnee anzeigt; und
- künstlichen Schnee gemäß dem ersten Steuersignal zu erzeugen.

6. Fahrzeugklimaanlage (100) nach Anspruch 5, wobei die Fahrzeugklimaanlage (100) eine Vielzahl von Kühlerauslässen (30a,30b,30c,30d) umfasst und das erste Steuersignal eine Anfrage zum Erzeugen von künstlichem Schnee durch mindestens einen ersten Kühlerauslass (30a,30b,30c,30d) der Vielzahl von Kühlerauslässen (30a,30b,30c,30d) zum Erzeugen des künstlichen Schnees in mindestens einer ersten vordefinierten Zone des Fahrzeugraums (40a,40b,40c) umfasst.

7. Fahrzeugklimaanlage (100) nach einem der Ansprüche 5 bis 6, wobei das erste Steuersignal von einer elektronischen Vorrichtung (800) erzeugt wird, die operativ mit der Fahrzeugklimaanlage (100) verbunden ist.

8. Fahrzeugklimaanlage (100) nach Anspruch 7, wobei das erste Steuersignal einem Ereignis in einem Spiel zugeordnet ist, das an der elektronischen Vorrichtung (800) gespielt wird.

9. Fahrzeugklimasteuersystem (100) nach Anspruch 8, wobei der künstliche Schnee innerhalb eines Fahrzeugs (1) als visueller und/oder kühlender Schneeeffekt in einer reellen Umgebung erzeugt wird, die einer virtuellen Umgebung des Spiels zugeordnet ist.

10. Fahrzeugklimaanlage (100) nach einem der Ansprüche 5 bis 6, wobei das erste Steuersignal erzeugt wird, um einen Kühleffekt für den Fahrzeuginsassen (2a, 2b) durch den künstlichen Schnee zu bewirken.

11. Fahrzeugklimaanlage (100) nach Anspruch 10, wobei das erste Steuersignal erzeugt wird, um einen Kühleffekt an einem vordefinierten Teil des Fahrzeuginsasses (2a, 2b) zu erzeugen, der sich in der mindestens einen vordefinierten Zone des Fahrzeugraums (40a,40b,40c) innerhalb des Fahrzeugs (1) befindet.

12. Verfahren zum Erzeugen eines Schneeeffekts innerhalb eines Fahrzeuginsassenraums eines Fahrzeugs (1) durch eine Fahrzeugklimaanlage (100), wobei das Verfahren Folgendes umfasst:
- (S1) Empfangen eines ersten Steuersignals, das die Erzeugung von künstlichem Schnee anzeigt; und
- (S2) Erzeugen von künstlichem Schnee durch die Fahrzeugklimaanlage (100) nach Anspruch 1, durch mindestens einen ersten Kühlerauslass (30a,30b,30c,30d), der konfiguriert ist, um im Inneren des Fahrzeugs (1) gemäß dem ersten Steuersignal künstlichen Schnee auszugeben.

13. Verfahren nach Anspruch 12, wobei das erste Steuersignal von einer elektronischen Vorrichtung (800) erzeugt wird, die operativ mit der Fahrzeugklimaanlage (100) verbunden ist.

14. Verfahren nach Anspruch 12, wobei das erste Steuersignal erzeugt wird, um einen Kühleffekt für den Fahrzeuginsassen (2a, 2b) durch den künstlichen Schnee zu bewirken.

15. Computerprogrammprodukt (500), umfassend ein nicht flüchtiges computerlesbares Medium, das darauf ein Computerprogramm aufweist, umfassend Programmanweisungen, wobei das Computerprogramm in eine Verarbeitungsschaltung (102) ladbar ist und eingerichtet ist, um die Ausführung des Verfahrens nach einem der Ansprüche 12 bis 14 zu veranlassen, wenn das Computerprogramm von der Verarbeitungsschaltung (102) ausgeführt wird.

## Revendications

1. Système de climatisation de véhicule (100) configuré pour générer un effet de neige à l'intérieur d'un compartiment d'occupant de véhicule d'un véhicule (1), **caractérisé en ce que** le système de climatisation de véhicule (100) comprend :
un récipient de liquide (9) configuré pour contenir un liquide pour générer de la neige artificielle;
une entrée d'air (19) configurée pour fournir de l'air à l'intérieur du véhicule (1) pour générer de la neige artificielle ; et
au moins une première sortie de refroidisseur (30a,30b,30c,30d) en communication fluidique avec le récipient de liquide (9) et l'entrée d'air (19) et configurée pour délivrer de la neige artificielle à l'intérieur du véhicule (1).

2. Système de climatisation de véhicule (100) selon la revendication 1, dans lequel le système de climatisation de véhicule (100) comprend en outre :
au moins un premier générateur de liquide froid (10) configuré pour refroidir le liquide à une température supérieure à la température de congélation du liquide ; et
au moins un premier générateur d'air froid (20a,20b) configuré pour refroidir l'air à une température inférieure à la température de congélation du liquide ;
dans lequel le liquide refroidi est mélangé avec l'air refroidi au moins au niveau de la première sortie de refroidisseur (30a,30b,30c,30d) pour générer la neige artificielle.

3. Système de climatisation de véhicule (100) selon la revendication 2, dans lequel le liquide refroidi est transporté de l'au moins premier générateur de liquide froid (10) vers l'au moins première sortie de refroidisseur (30a,30b,30c,30d) via un premier système de canalisation. (1pl1,1pl2,...,1pln) à l'intérieur du véhicule (1) pour délivrer de la neige artificielle dans au moins une première zone prédéfinie du compartiment de véhicule (40a,40b,40c) définie par la plage de l'au moins première sortie de refroidisseur (30a,30b,30c,30d) à l'intérieur du véhicule (1).

4. Système de climatisation de véhicule (100) selon l'une quelconque des revendications 2 ou 3, dans lequel l'air refroidi est transporté de l'au moins premier générateur d'air froid (20a,20b) vers l'au moins première sortie de refroidisseur (30a,30b,30c,30d) via un deuxième système de canalisation. (2pl1,2pl2,...,2pln) à l'intérieur du véhicule (1) pour délivrer de la neige artificielle dans au moins une première zone prédéfinie du compartiment de véhicule (40a,40b,40c) définie par la plage de l'au moins première sortie de refroidisseur (30a,30b,30c,30d) à l'intérieur du véhicule (1).

5. Système de climatisation de véhicule (100) selon l'une quelconque des revendications précédentes, dans lequel le système de climatisation de véhicule (100) comprend en outre : un circuit de traitement (102) configuré pour amener le système de climatisation de véhicule (100) à :
- recevoir un premier signal de commande, indicatif de la génération de neige artificielle ; et
- générer de la neige artificielle en fonction du premier signal de commande.

6. Système de climatisation de véhicule (100) selon la revendication 5, dans lequel le système de climatisation de véhicule (100) comprend une pluralité de sorties de refroidisseur (30a,30b,30c,30d), et le premier signal de commande comprend une demande de génération de neige artificielle par au moins une première sortie de refroidisseur (30a,30b,30c,30d) de la pluralité de sorties de refroidisseur (30a,30b,30c,30d) pour générer la neige artificielle dans au moins une première zone prédéfinie du compartiment de véhicule (40a,40b,40c).

7. Système de climatisation de véhicule (100) selon l'une quelconque des revendications 5 à 6, dans lequel le premier signal de commande est généré par un dispositif électronique (800) connecté de manière opérationnelle au système de climatisation de véhicule (100).

8. Système de climatisation de véhicule (100) selon la revendication 7, dans lequel le premier signal de commande est associé à un événement dans un jeu joué au dispositif électronique (800).

9. Système de climatisation de véhicule (100) selon la revendication 8, dans lequel la neige artificielle à l'intérieur d'un véhicule (1) est générée sous la forme d'un effet de neige visuel et / ou refroidissant dans un environnement réel associé à un environnement virtuel du jeu.

10. Système de climatisation de véhicule (100) selon l'une quelconque des revendications 5 à 6, dans lequel le premier signal de commande est généré pour provoquer un effet de refroidissement sur l'occupant de véhicule (2a,2b) par la neige artificielle.

11. Système de climatisation de véhicule (100) selon la revendication 10, dans lequel le premier signal de commande est généré pour provoquer l'effet de refroidissement au niveau d'une partie prédéfinie de l'occupant de véhicule (2a,2b) qui est située dans au moins une première zone prédéfinie du compartiment de véhicule (40a,40b,40c) à l'intérieur du véhicule (1).

12. Procédé pour générer un effet de neige à l'intérieur d'un compartiment d'occupant de véhicule d'un véhicule (1) par un système de climatisation de véhicule (100), le procédé comprenant :
- (S1) la réception d'un premier signal de commande, indicatif de la génération de neige artificielle ; et
- (S2) la génération de neige artificielle par le système de climatisation de véhicule (100) selon la revendication 1, par au moins une première sortie de refroidisseur (30a,30b,30c,30d) configurée pour délivrer de la neige artificielle à l'intérieur du véhicule (1), selon le premier signal de commande.

13. Procédé selon la revendication 12, dans lequel le premier signal de commande est généré par un dispositif électronique (800) connecté de manière opérationnelle au système de climatisation de véhicule (100).

14. Procédé selon la revendication 12, dans lequel le premier signal de commande est généré pour provoquer un effet de refroidissement sur l'occupant de véhicule (2a,2b) par la neige artificielle.

15. Produit de programme informatique (500) comprenant un support non transitoire et lisible par ordinateur, ayant dessus un programme informatique comprenant des instructions de programme, le programme informatique pouvant être chargé dans une circuiterie de traitement (102) et configuré pour amener l'exécution du procédé selon l'une quelconque des revendications 12 à 14 quand le programme informatique est exécuté par l'au moins une circuiterie de traitement (102).
